# EUROPEAN PATENT APPLICATION

(11) **EP 2 502 656 A1**
(43) Date of publication of application: **26.09.2012**
(21) Application number: 10831565.6
(22) Date of filing: 17.11.2010
(51) Int. Cl.: B01D 21/01, C02F 1/54

(54) **FLOCCULATING AGENT STARTING MATERIAL USING BROWN ALGAE AS STARTING MATERIAL, FLOCCULATING AGENT USING SAID STARTING MATERIAL, PREPARATION METHOD FOR SAID FLOCCULATING AGENT, AND PURIFICATION METHOD USING SAID FLOCCULATING AGENT**

(30) Priority: 18.11.2009 JP 2009262493
(71) Applicant: Tokyo University of Marine Science and Technology, Minato-ku, Tokyo 108-8477 (JP)
(72) Inventor: ENOKI Makiko, Tokyo 108-8477 (JP); SATO Michisuke, Osaka-shi Osaka 541-0043 (JP); YASUOKA Keiichi, Osaka-shi Osaka 541-0043 (JP)
(74) Representative: Fiener, Josef
(86) International application number: PCT/JP2010/070425
(87) International publication number: WO 2011/062171

(57) **Abstract**

In order to inexpensively obtain a flocculating agent that uses brown algae, particularly brown algae due to be disposed of, as a starting material and that has a uniform aggregation capacity void of variation, a brown algae powder is obtained by treating brown algae with an acid aqueous solution, rinsing said brown algae treated with the acid aqueous solution in water, drying the rinsed brown algae, and grinding said dried brown algae into a powder form. Next, a flocculating agent is obtained by mixing a sodium compound powder with said brown algae powder that was ground into a powder form. The flocculating agent may be obtained by grinding the brown algae with the sodium compound already mixed therein. The flocculating agent comprises a mixed powder of the sodium compound powder and the dry brown algae powder treated with the acid aqueous solution, and the preferred ratio of the sodium compound powder included in said mixed powder is 5 to 10 wt%.

## Description

### Technical Field

The present invention relates to a raw material for flocculant including brown algae as a raw material, a flocculant including its raw material for flocculant, a method for production of the flocculant, and a water-purification method using the flocculant.

### Background Art

Among materials ingested by human beings, effects of industrially synthesized chemicals on the human body have recently been public concern. In the case of purifying water with a flocculant of such a chemical, the flocculant is also public concern for its effect on the human body. Accordingly, use of alginic acid has been used as a flocculant as it is harmless if it is ingested by human beings. A large amount of alginic acid is present between cells of brown algae; people have traditionally ingested brown algae as food; it is therefore obvious that alginic acid is harmless to human health. In addition, large portions of brown algae are unmarketable and are discarded, which causes a problem of disposal.

Accordingly, brown algae that are usually discarded have been proposed to be used as a flocculant: Brown algae are washed with dilute hydrochloric acid to modify alginic acid contained in the brown algae to a form that can be easily extracted. To this washed brown algae, Sodium carbonate is added to yield a paste of brown algae. In the paste of brown algae, alginic acid in tissues elutes out from the tissues into an aqueous phase of the paste by the effect of sodium carbonate to exhibit a flocculating function. The paste is used as a flocculant without removing the remaining insoluble tissues.

The wet paste of brown algae contains free alginic acid existing outside of tissues, which is able to purify suspension water by following process. First, the wet paste of brown algae is added to and mixed with the suspension, and then, an aqueous solution of calcium chloride is added to and mixed with the suspension. Alginic acid in the suspension reacts with calcium ions to forms gel through formation of a cross-linking structure adsorbing suspended solids, resulting in aggregation and precipitation of the suspended solid in treated water. Thus, the suspension is purified by removing the suspended solids.

### Citation List

### Patent Literature

PTL 1: Japanese Unexamined Patent Application Publication No. 2000-245403
PTL 2: Japanese Unexamined Patent Application Publication No. 2005-331195
PTL 3: Japanese Unexamined Patent Application Publication No. 2007-136296 Non Patent Literature

NPL 1: "Development of coagulant for dredging using sea alga: Preparation of algal paste and its coagulating effect for muddy water", Nippon Suisan Gakkaishi, Vol. 74, No. 4, pp. 688-693
NPL 2: New Energy and Industrial Technology Development Organization, Technical Report of Industrial Technology Research Grant Program in FY 2006, "Study of application of purification residue to flocculating/aggregating agent for dredging", Date of Preparation: December 2007, Makiko Enoki, Tokyo University of Marine Science and Technology

### Summary of Invention

### Technical Problem

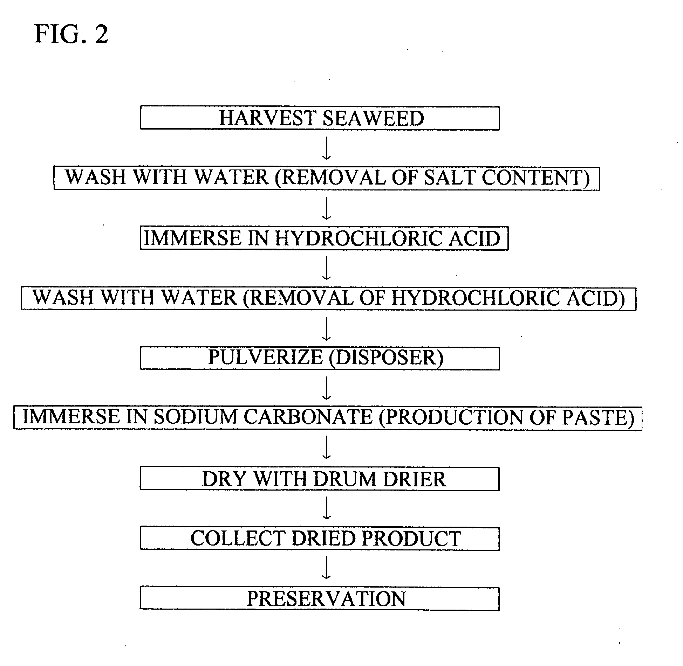

The present inventors of the present invention tried to produce a flocculant by a method shown in Fig. 2 using brown algae as a raw material. That is, harvested brown algae were washed with water to remove adhering salts, immersed in approximately 0.12 to 0.24 M dilute hydrochloric acid, washed with water, and then crushed with a crusher (e.g., mixer or disposer). An aqueous solution of about 0.75% sodium carbonate was added to and mixed with the resulting slurry of brown algae. This slurry of brown algae was dried into a flake form with a drier (drum drier) utilizing heat of condensation of water vapor, and the flakes were crushed and used as a flocculant.

Unfortunately, since the water contents in the resulting slurry of brown algae vary for each lot due to the no uniform water contents in brown algae as a raw material, simultaneously, the concentration of sodium carbonate in slurry of brown algae varies even if a certain amount of sodium carbonate is added to the slurry of brown algae. This means that the slurry of brown algae cannot be treated under same condition. As a result, the flocculation capacity of the resulting flocculant is allowed to vary for every lot of brown algal paste. This problem is able to be solved by determination of the amount of sodium carbonate against dry weight of brown algal paste by measuring its water content for every lot of brown algal slurry. However, this method remains complicated operation process as another problem.

In addition, in order to enhance the subsequent drying process effectively, the water content of the brown algal slurry should be controlled as less as possible when the aqueous solution of sodium carbonate is added to the slurry. However, low water content causes low fluidity to the slurry. Thus, it becomes difficult to have homogeneous mixture of the aqueous solution of sodium carbonate and the slurry of brown algae by usual stirring method, resulting in heterogeneous reaction of the brown algal slurry with sodium carbonate and uneven quality in algal flocculant for the flocculation capacities.

The wet paste of brown algae rots because of the moisture. Therefore, algal paste must be preserved as dried form until usage. The paste of brown algae hardly allows air to pass through the inside and is thus hardly dried. Since drying a large amount of such wet paste of brown algae is so difficult, it is necessary to use a specific drier, such as a drum drier, that dries an object with heat of condensation of water vapor. Consequently, the drying cost gets high, resulting in a high manufacturing cost of the flocculant.

The object of the present invention to solve the above-mentioned problems is to provide a flocculant having a desired flocculation capacity without variation in flocculation capacity at a low cost by using brown algae as a raw material.

### Solution to Problem

The present inventors have found that a powder mixture of a powder of brown algae not applied to reaction with a sodium compound and a powder of a sodium compound can be directly used as a flocculant. The present invention has been accomplished based on this finding.

That is, the most important characteristics of the present invention are that a dry powder of brown algae treated with an acid aqueous solution is used as a raw material for a flocculant and is mixed with a powder of a sodium compound to obtain the flocculant and this flocculant can be used for purifying the suspension water.

The raw material for a flocculant according to the present invention includes a dry powder of brown algae as the main ingredient, which is treated with an acid aqueous solution and then washed with water. The flocculant according to the present invention is a powder mixture of a dry powder of brown algae treated with acid aqueous solution and then washed with water and a powder of a sodium compound.

The method of producing a flocculant according to the present invention includes the steps of treating brown algae with an acid aqueous solution, washing the brown algae treated with the acid aqueous solution with water, drying the brown algae washed with water, pulverizing the dried brown algae into a powder, and mixing the powder of the brown algae pulverized into a powder form together with a powder of a sodium compound.

Another method of producing a flocculant according to the present invention includes the steps of treating brown algae with an acid aqueous solution, washing the brown algae treated with the acid aqueous solution with water, drying the brown algae washed with water, mixing the dried brown algae with a powder of a sodium compound, and pulverizing the brown algae mixed with the sodium compound powder into a powder form.

Any seaweed containing alginic acid can be used as the brown sea algae in the present invention, and examples thereof include, but not limited to, seaweed such as Wakame (Undaria pinnatifida), Kombu (Focus vesiculosus), Sargassum, and Fucus.

The brown algae as a raw material are not limited to those brought ashore or residues in food processing that are supposed to be discarded and could be those harvested from the sea as a raw material for a flocculant or those cultivated in the sea as a raw material for a flocculant.

As an acid for aqueous acidic solution, hydrochloric acid can be used, for example. Any other acid that accelerates activation of alginic acid can also be used as the acid, for instance, sulfuric acid, phosphoric acid, and citric acid.

In the case using hydrochloric acid as the acid, its concentration in the range from 0.1 to 0.3 M is preferred. When the concentration of dilute hydrochloric acid is in this range, the resulting algal flocculant can reduces the SS concentration of subject water to 50 ppm or less. In particular, the concentration of dilute hydrochloric acid is preferably 0.12 to 0.3 M. The resulting algal flocculant prepared with concentration of dilute hydrochloric acid in this range can reduce the SS concentration of treated water to 30 ppm or less and allows lower consumption of dilute hydrochloric acid.

A concentration of dilute hydrochloric acid higher than 0.3 M also can reduce the SS concentration of treated water to 30 ppm or less, but the consumption of dilute hydrochloric acid is wastefully increased compared to the purification effect; dilute hydrochloric acid used for treating brown algae is difficult to be removed from the brown algae; and the consumption of sodium carbonate, which is added to the brown algae later, increases. Accordingly, the upper limit of the dilute hydrochloric acid concentration is determined to be 0.3 M, but this upper limit is not absolute and it is not intended to exclude a dilute hydrochloric acid concentration of higher than 0.3 M.

The treatment method with an acid aqueous solution is not limited to immersion of seaweed in an acid aqueous solution and could be any method, such as spraying of an acid to seaweed, as long as the method allows an acid aqueous solution to adhere to the surface of seaweed and thereby to act on intercellular spaces.

Any sodium compound that allows sodium ions to act on alginic acid can be used. Examples of the sodium compound, from the viewpoint of easiness in obtaining, include, but not limited to, sodium carbonate, sodium hydroxide, and sodium hydrogen carbonate.

In the case of using sodium carbonate as the sodium compound, the ratio of the sodium carbonate contained in the powder mixture is preferably 5 to 10 wt%. A concentration of sodium carbonate in this range reduces the SS concentration of treated water to 50 ppm or less. In particular, the ratio of sodium carbonate is more preferably 7.5 to 10 wt%. A concentration of sodium carbonate in this range reduces the SS concentration of treated water to 30 ppm or less and allows relatively low consumption of sodium carbonate. In contrast, an excess amount of sodium ions is one of reasons for preventing a cross-linking reaction between alginic acid and calcium ions in treatment of suspension water.

A content rate of sodium carbonate higher than 10 wt% also can reduce the SS concentration of treated water to 30 ppm or less, but the consumption of sodium carbonate is wastefully increased compared to the purification effect. Accordingly, the upper limit of the sodium carbonate concentration is determined to be 10 wt%, but this upper limit is not absolute and it is not intended to exclude a sodium carbonate concentration of higher than 10 wt%.

The purifying method according to the present invention includes the steps of preparing a flocculant solution by mixing the flocculant with water, adding and mixing the flocculant solution with water to be purified, and adding and mixing calcium chloride with the suspension water mixed with the flocculant solution. When adding and mixing of suspension water with calcium chloride, it is preferable to gently mix the suspension water with calcium chloride not to destroy flocs formed by flocculation of turbidity components in the suspension water.

Another purifying method according to the present invention include the steps of adding and mixing calcium chloride with suspension water, preparing a flocculant solution by mixing the flocculant with water, and adding and mixing the flocculant solution with the suspension water mixed with calcium chloride. When adding of the flocculant solution to the suspension water, it is preferable to gently mix the suspension water with the flocculant solution not to destroy flocs formed by flocculation of turbidity components in the suspension water.

In the purifying method, the amount of calcium chloride added to water to be purified is preferably in the range of 0.5 to 1.0 g/L based on 1 L of suspension water. An amount of calcium chloride in the range of 0.5 to 1.0 g/L exhibits a desired purifying effect, but an amount of calcium chloride of less than 0.5 g/L does not provide a sufficient flocculation capacity. An amount of calcium chloride higher than 1.0 g/L does not increase the flocculation capacity any more.

### Advantageous Effects of Invention

In the present invention, a reaction of brown algae and a sodium compound is unnecessary for producing a flocculant, and therefore making slurry from brown algae is unnecessary to produce a flocculant. Thus, the present invention has an effect in which a flocculant can be produced easily using brown algae as a raw material at a low cost without a troublesome and expensive process of drying brown algal slurry, which is difficult to dry.

In the present invention, a powder of dried brown algae is used, instead of brown algae in a paste form in which the water content rate is unclear. Accordingly, the amount of sodium compound to be added to brown algae can be precisely determined. Thus, the present invention has an advantage that a flocculant having constant and excellent flocculation properties can be yielded.

The water content ratio of the brown algae in the paste form could be determined by drying an aliquot of the paste. Such process needs plenty of time and effort and is troublesome and, therefore, cannot be easily performed by everyone at everywhere, when considered for the practical field where a flocculant is actually produced from brown algae and used.

In the present invention, a flocculant is yielded by mixing a powder of brown algae with a powder of a sodium compound, instead of yielding a flocculant by mixing an aqueous solution of a sodium compound with a paste of brown algae. Since both the brown algae and the sodium compound are in powder forms, deterioration during storage is inhibited. The powder of brown algae is diluted to the concentration suitable for charging just before usage and thereby can advantageously provide a flocculant homogeneous property.

In addition, since the powder of brown algae is prepared from dried seaweed directly by pulverizing, instead of crushing wet brown algae in a paste form followed by drying, the drying can be performed with a usual drier without necessity of using a large specific drier. Thus, a flocculant in a powder form can be advantageously yielded at a low cost.

The flocculant according to the present invention can be produced using a usual drier for drying seaweed directly, i.e., a drier that is available everywhere and merely dries an object to be dried placed in a heated drying chamber, without using a specific drier for drying brown algae in a paste form. For example, seaweed that has been discarded at outlying coast or wastefully rotted can be effectively utilized as a flocculant.

In the present invention, when producing a flocculant by pulverizing brown algae mixed with a sodium compound powder into a powder form, the sodium compound powder is pulverized into further fine particles and is more satisfactorily dispersed in or mixed with the resulting powder of brown algae. Thus, the present invention has an advantage that a flocculant having high flocculation capacity can be obtained.

In the present invention, since seaweed merely treated with an acid aqueous solution is used as a flocculant, without extracting pure alginic acid from seaweed, the flocculant can be obtained at a considerably low cost, compared to the case of using pure alginic acid extracted from seaweed as a flocculant. Thus, the present invention has an advantage that suspension water can be purified at a considerably low cost.

The raw material of the flocculant according to the present invention is seaweed, which has been ingested by human beings for a long time and is known to be harmless to the human body. The purified water does not have a risk such as environmental hormones, contradictory to the case of flocculant made from a chemically synthesized material. Thus, the present invention has an advantage that the flocculant has significantly high safety.

### Brief Description of Drawings

[Fig. 1] Figure 1 is a flow chart showing a method of producing a flocculant according to the present invention.
[Fig. 2] Figure 2 is a flow chart showing a method of producing a flocculant as a Comparative Example conducted by the present inventors.

### Description of Embodiments

The present invention has realized the object to obtain a flocculant having a desired flocculation capacity at low cost using brown algae as a raw material without decreasing the safety to human health.

### Example 1

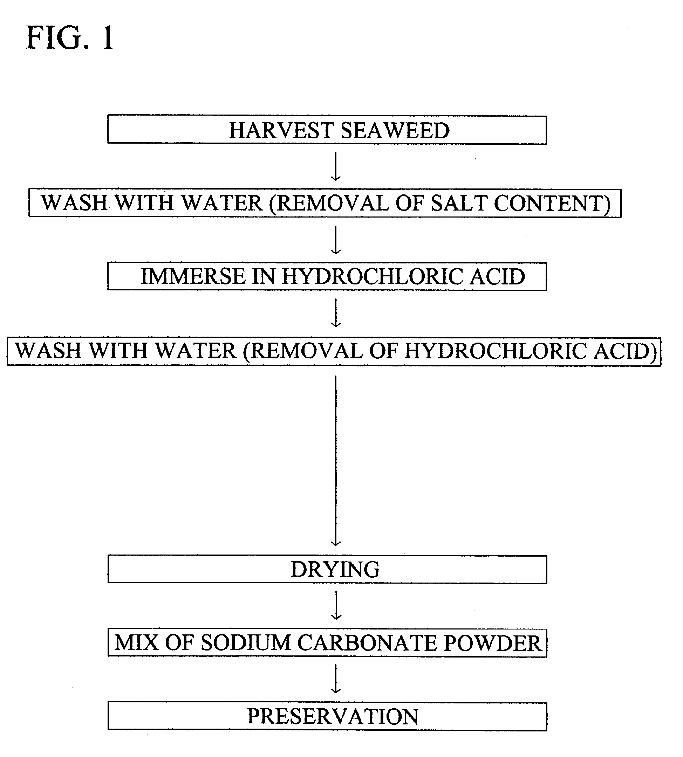

An example of a method of producing a flocculant according to the present invention will be described with reference to the flow chart shown in Fig. 1. Raw wakame (raw brown algae), which is brown algae, harvested from the sea was washed with water to remove salts adhering to its surface and then immersed in 0 to 1.2 M dilute hydrochloric acid for 1 hr. The immersion in dilute hydrochloric acid makes the surface of raw wakame slimy.

The raw wakame was taken out from dilute hydrochloric acid and was washed with water to remove dilute hydrochloric acid, followed by drying at 80°C for 6 hr in a drier. The drying drastically reduced the volume of the raw wakame and provided 18 g of dried wakame from 100 g of raw wakame.

Subsequently, the dried wakame was pulverized with a pulverizer to obtain a wakame powder. The resulting wakame powder was sufficiently mixed with a sodium carbonate powder to yield a flocculant in a powder form composed of the wakame powder and the sodium carbonate powder. The rate of the sodium carbonate powder was adjusted to be 7.5 wt%.

Subsequently, 0.5 g of this flocculant was mixed with 69.5 mL of water to prepare a flocculant solution. In this step, sodium carbonate is dissolved in water, and alginic acid in the wakame powder reacts with sodium carbonate and elutes out into the flocculant solution.

Suspension water having an SS concentration of 10000 ppm was purified using this flocculant solution under the conditions of 50 g of the flocculant and 500 g of calcium chloride per 1 ton of suspension water to investigate a preferred ratio of sodium carbonate to the wakame powder.

An aqueous solution of calcium chloride was added to suspension water, followed by stirring. Subsequently, the flocculant solution was added to this suspension, followed by stirring to yield flocs in the treated water. The flocs are formed by formation of gel through formation of a cross-linking structure by a reaction of alginic acid in the aqueous solution with calcium chloride and its subsequent precipitation in the treated water.

The flocs of gelated alginic acid gradually grew with entangling suspended solids in suspension water and precipitated accompanied with standing time to provide a clear supernatant. Table 1 shows the SS concentrations of supernatants of treated water after leaving to stand for 3 hr.

**[Table 1]**

| | | | | | | | | | |
|---|---|---|---|---|---|---|---|---|---|
| Dilute hydrochloric acid (M) | 0.00 | 0.03 | 0.06 | 0.10 | 0.12 | 0.20 | 0.30 | 0.60 | 1.20 |
| SS concentration (mg/L) | 255 | 211 | 162 | 50 | 11 | 12 | 21 | 12 | 20 |

The results shown in Table 1 reveal that the SS concentration is 50 ppm or less at 0.1 M or more dilute hydrochloric acid and that a concentration of dilute hydrochloric acid of 0.1 M or more is preferred for treating raw wakame. However, a higher concentration of dilute hydrochloric acid than 0.3 M does not provide a further enhanced effect. Accordingly, the practical concentration of dilute hydrochloric acid is preferably about 0.1 to 0.3 M.

### Example 2

A flocculant was prepared under the same conditions as in Example 1 except that the concentration of dilute hydrochloric acid was 0.12 M and that the amounts of sodium carbonate powder were 0 to 30 wt%. Experiment of purifying suspension water was performed using this flocculant. Table 2 shows the SS concentrations of supernatants of treated water after leaving to stand for 3 hr.

**[Table 2]**

| | | | | | | | |
|---|---|---|---|---|---|---|---|
| Sodium carbonate (wt%) | 0 | 2.5 | 5.0 | 7.5 | 10 | 20 | 30 |
| SS concentration (mg/L) | 243 | 190 | 36 | 21 | 25 | 25 | 25 |

The results shown in Table 2 reveal that the SS concentration is 50 ppm or less at 5.0 to 10.0 wt% of sodium carbonate powder and the SS concentration is 30 ppm or less at 7.5 wt% of sodium carbonate powder and that a particularly preferred ratio of sodium carbonate powder to raw wakame is 7.5 to 10.0 wt%.

### Example 3

Dry powders of Kombu, Sargassum, and Fucus were prepared as in Example 1 at a concentration of dilute hydrochloric acid of 0.12 M. To each dry powder, a sodium carbonate powder was added at a ratio of 10.0 wt%, followed by sufficient mixing to obtain a flocculant in a powder form. Under the same conditions as in Example 1, flocculants were prepared and used for experiment of purifying suspension water. Table 3 shows the SS concentrations of supernatants of treated water after leaving to stand for 3 hr.

**[Table 3]**

| Seaweed | Wakame | Kombu | Sargassum | Fucus |
|---|---|---|---|---|
| SS concentration (mg/L) | 11 to 21 | 9 to 14 | 10 to 11 | 11 to 13 |

The results shown in Table 3 reveal that a powder of Kombu, Sargassum, or Fucus mixed with a sodium carbonate powder reduces the SS concentration of the supernatant of treated water to 30 ppm or less as in the flocculant of a Wakame powder and that the flocculant which raw material is Kombu, Sargassum, or Fucus also has a flocculation capacity as in the flocculant which raw material is Wakame.

### Example 4

A flocculant was prepared under the same conditions as in Example 1 except that the concentration of dilute hydrochloric acid was 0.12 M and that the ratio of a sodium carbonate powder was 10.0 wt%. Experiment of purifying suspension water by adding 0.25 to 2 g/L of calcium chloride to the suspension water was performed under the same conditions as in Example 1. Table 4 shows the SS concentrations of supernatants of treated water after leaving to stand for 3 hr.

**[Table 4]**

| | | | | | | |
|---|---|---|---|---|---|---|
| Calcium chloride (g/L) | 0.25 | 0.45 | 0.50 | 0.75 | 1.00 | 2.00 |
| SS concentration (mg/L) | 66.5 | 36.0 | 18.0 | 20.0 | 23.0 | 23.0 |

The results shown in Table 4 reveal that addition of 0.5 g/L or more of calcium chloride decreases the SS concentration to 30 ppm or less and that a preferred amount of calcium chloride to be added is 0.5 g/L or more. However, an amount of 1.0 g/L or more does not provide a further enhanced effect. Accordingly, the practical amount of calcium chloride is preferably 0.5 to 1.0 g/L.

### Example 5

A case where a flocculant solution was added to suspension water after addition of calcium chloride and a case where a flocculant solution was added to suspension water before addition of calcium chloride were investigated to confirm whether a difference in SS concentrations of treated water after purification would occur or not. Suspension water having SS concentration of 10000 ppm was purified using a flocculant which raw material was Kombu under conditions of 50 g of the flocculant as a dry weight and 500 g of calcium chloride per 1 ton of water to be treated. Table 5 shows the measured SS concentrations of supernatants of treated water.

**[Table 5]**

| Calcium chloride | Earlier addition | Later addition |
|---|---|---|
| SS concentration (mg/L) | 14 | 28 |

The results shown in Table 5 reveal that the SS concentration of treated water was 14 ppm when calcium chloride was added before addition of the flocculant solution and was 28 ppm when calcium chloride was added after addition of the flocculant solution and that the purification result in the case of adding calcium chloride before addition of the flocculant was better than the other. Thus, when calcium chloride is added before addition of a flocculant, the amount of a flocculant can be reduced, and thereby the treatment cost can be reduced.

### Industrial Applicability

The flocculant is produced using brown algae as a raw material, which have been ingested by human beings for a long time and are known to be harmless to the human body. Accordingly, the flocculant can be applied to not only purification of water but also purification of liquid food such as purification of juice and purification of liquor.

## Claims

1. A raw material for a flocculant, wherein a main ingredient is a dry powder of brown algae treated with an acid aqueous solution and then washed with water.

2. The raw material for a flocculant according to Claim 1, wherein the acid aqueous solution is an aqueous solution of 0.1 to 0.3 M hydrochloric acid.

3. A flocculant comprising a powder mixture of a dry powder of brown algae treated with an acid aqueous solution and then washed with water and a powder of a sodium compound.

4. The flocculant according to Claim 3, wherein the acid aqueous solution is an aqueous solution of 0.1 to 0.3 M hydrochloric acid; the sodium compound is sodium carbonate; and the sodium carbonate is contained in the powder mixture at a rate of 5 to 10 wt%.

5. A method of producing a flocculant, comprising the steps of treating brown algae with an acid aqueous solution; washing the brown algae treated with the acid aqueous solution with water; drying the brown algae washed with water; pulverizing the dried brown algae into a powder; and mixing the powder of the brown algae pulverized into a powder form with a powder of a sodium compound.

6. The method of producing a flocculant according to Claim 5, wherein the acid aqueous solution is an aqueous solution of 0.1 to 0.3 M hydrochloric acid; the sodium compound is sodium carbonate; and the sodium carbonate is contained in the powder mixture at a rate of 5 to 10 wt%.

7. A method of producing a flocculant, comprising the steps of treating brown algae with an acid aqueous solution; washing the brown algae treated with the acid aqueous solution with water; drying the brown algae washed with water; mixing the dried brown algae with a powder of a sodium compound; and pulverizing the brown algae mixed with the sodium compound powder into a powder form.

8. The method of producing a flocculant according to Claim 7, wherein the acid aqueous solution is an aqueous solution of 0.1 to 0.3 M hydrochloric acid; the sodium compound is sodium carbonate; and the sodium carbonate is contained in the powder mixture at a rate of 5 to 10 wt%.

9. A purifying method comprising the steps of preparing a flocculant solution by mixing the flocculant according to Claim 3 or 4 with water; adding and mixing the flocculant solution with water to be purified; and adding and mixing calcium chloride with the water to be purified mixed with the flocculant solution.

10. A purifying method comprising the steps of adding and mixing calcium chloride with water to be purified; preparing a flocculant solution by mixing the flocculant according to Claim 3 or 4 with water; and adding and mixing the flocculant solution with the water to be purified mixed with calcium chloride.

11. The purifying method according to Claim 9 or 10, wherein the amount of calcium chloride added to water to be purified is 0.5 to 1 g/L.
